(19) Europäisches Patentamt
European Patent Office
Office européen des brevets

(11) **EP 4 660 358 A1**

(12) **EUROPEAN PATENT APPLICATION**
published in accordance with Art. 153(4) EPC

(43) Date of publication:
**10.12.2025 Bulletin 2025/50**

(21) Application number: **24774447.7**

(22) Date of filing: **30.01.2024**

(51) International Patent Classification (IPC):
**D01F 9/22** (2006.01)    **C08J 5/04** (2006.01)
**C08J 5/24** (2006.01)

(52) Cooperative Patent Classification (CPC):
**C08J 5/04; C08J 5/24; D01F 9/22**

(86) International application number:
**PCT/JP2024/002785**

(87) International publication number:
**WO 2024/195301 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.03.2023 JP 2023044879**

(71) Applicant: **Toray Industries, Inc.**
**Tokyo 103-8666 (JP)**

(72) Inventors:
• YOMO Takayuki
  Iyo-gun, Ehime 791-3193 (JP)
• OKISHIMA Yuuki
  Iyo-gun, Ehime 791-3193 (JP)
• WATANABE Jun
  Iyo-gun, Ehime 791-3193 (JP)

(74) Representative: **Prüfer & Partner mbB**
**Patentanwälte · Rechtsanwälte**
**Sohnckestraße 12**
**81479 München (DE)**

(54) **CARBON FIBER BUNDLE, PREPREG, AND CARBON FIBER-REINFORCED COMPOSITE MATERIAL**

(57) The main object of the present invention is to provide a carbon fiber bundle having a high fiber quality grade, strand tensile strength, strand tensile modulus, and single-fiber compressive strength, as well as a prepreg and a carbon fiber-reinforced composite produced therefrom. To fulfill this object, the carbon fiber bundle according to the present invention has a strand tensile strength of 4.5 GPa or more and 6.5 GPa or less, a strand tensile modulus of 400 GPa or more, a size of crystallites of 4.0 nm or more and 4.7 nm or less, and a single-fiber diameter of 5.2 $\mu$m or more and 6.2 $\mu$m or less and being substantially non-twisted.

**EP 4 660 358 A1**

**Description**

TECHNICAL FIELD

The present invention relates to a carbon fiber bundle, as well as a prepreg and a carbon fiber-reinforced composite made of the carbon fiber bundle, that can be used suitably for manufacturing sporting goods such as golf shafts and fishing rods and other general industrial applications.

BACKGROUND ART

Being extremely high in specific strength and specific modulus, carbon fiber bundles have been actively used in recent years as reinforcing fibers for fiber-reinforced composites to be applied in various industrial fields. In particular, in those fields where weight reduction is emphasized, the replacement of conventional metallic materials with carbon fiber-reinforced composites has been accelerating. In sports applications, among others, weight reduction is demanded in golf shafts, fishing rods, bicycles, rackets, and the like, and the use of these materials is expanding increasingly.

In the context of weight reduction of materials for sports applications, there is a strong call for achieving a superior balance among various physical properties, including further improvement in the mechanical properties of carbon fiber bundles, especially in terms of the tensile modulus of resin impregnated strand (hereinafter also referred to simply as "strand elastic modulus"), as well as improvements in the tensile strength and compressive strength of carbon fiber-reinforced composites. Polyacrylonitrile based carbon fiber bundles, which are the most widely used carbon fiber bundles, are industrially produced by carrying out a stabilization step in which a polyacrylonitrile based precursor fiber bundle is converted into a stabilized fiber bundle in an oxidizing atmosphere controlled at 200°C to 300°C, a pre-carbonization step in which it is pre-carbonized in an inert atmosphere having a maximum temperature of 500°C to 1,000°C, and a carbonization step in which it is carbonized in an inert atmosphere having a maximum temperature of 1,200°C to 3,000°C. It is known that the strand elastic modulus of a carbon fiber bundle increases with an increasing maximum temperature in the carbonization step. However, it has been generally reported that a carbon fiber bundle with higher strand elastic modulus that is produced in a carbonization step with a higher maximum temperature has a larger size of crystallites, which can result in a carbon fiber-reinforced composite having a reduced compressive strength (Patent document 1), and this indicates that there is a general trade-off relationship between the compressive strength and strand elastic modulus of a carbon fiber-reinforced composite. To avoid this, efforts have been made to develop a means for improving the strand elastic modulus without increasing the size of crystallites. For example, as a technique to reduce the size of crystallites in a carbon fiber bundle, a method has been proposed in which ions are implanted onto the surface of carbon fiber to decrease the crystallinity in the surface layer of the carbon fiber, thereby enhancing the compressive strength of single-fibers (Patent document 1). Also, as a technique to enhance the strand elastic modulus of a carbon fiber bundle without increasing the size of crystallites, it is known to be effective to adopt an increased stretching ratio in the carbonization step, and in order to enhance the stretching ratio in the carbonization step while avoiding a decrease in processability, some techniques have been proposed including the entangling or twisting of the precursor fiber bundle to enhance the stretchability in the carbonization step (Patent documents 2 to 6). Furthermore, to allow a carbon fiber-reinforced composite with an increased compressive strength to be produced without using a stretching technique, there is a proposed technique that is designed to produce a carbon fiber bundle with an increased filament compressive strength by controlling the stabilized structure (Patent document 7).

PRIOR ART DOCUMENTS

PATENT DOCUMENTS

Patent document 1: Japanese Unexamined Patent Publication (Kokai) No. HEI 3-180514
Patent document 2: Japanese Unexamined Patent Publication (Kokai) No. 2014-141761
Patent document 3: Japanese Unexamined Patent Publication (Kokai) No. 2014-159665
Patent document 4: International Publication WO 2019/244830
Patent document 5: International Publication WO 2008/047745
Patent document 6: Japanese Unexamined Patent Publication (Kokai) No. 2008-308776
Patent document 7: Japanese Unexamined Patent Publication (Kokai) No. 2015-10290

SUMMARY OF INVENTION

PROBLEMS TO BE SOLVED BY THE INVENTION

However, although the implementation of ion implantation into carbon fiber as disclosed in Patent document 1 serves to achieve a decrease in the size of crystallites and an increase in the apparent compressive strength, up to a maximum of 10.0 GPa, as measured by the loop method, it cannot serve to achieve a satisfactory balance with the tensile elastic modulus of the resulting strand (hereinafter also referred to simply as "strand elastic modulus"). Furthermore, while the strand elastic modulus can be improved by introducing entanglement or twists as disclosed in Patent documents 2 to 6, thereby enabling the fiber bundle to withstand high tension without suffering from breaks during the carbonization step, it still fails to achieve satisfactory properties in terms of single-fiber compressive strength and the number of fuzz defects during prepreg processing. Furthermore, although the use of the technique disclosed in Patent document 7 enables the improvement of the single-fiber compressive strength by controlling the stabilized structure, the strand elastic modulus still remains at a low level and, when the carbonization step temperature is simply raised based on the technique disclosed in Patent document 7, a significant decrease in single-fiber compressive strength occurs, failing to achieving high levels of resin impregnated strand tensile strength, strand elastic modulus, and single-fiber compressive strength simultaneously. In order to solve these problems, the main object of the present invention is to provide a carbon fiber bundle that exhibits high strand strength, strand elastic modulus, and compressive strength simultaneously while maintaining a high fiber quality grade.

MEANS OF SOLVING THE PROBLEMS

The inventors of the present invention have arrived at this invention after discovering a method in which a carbon fiber bundle having improved mechanical properties and a persistent fiber quality grade to a level not previously attainable with conventional carbon fiber bundles can be produced by using a precursor fiber for carbon fiber having an increased fineness in order to improve productivity while controlling the stretching performed in the pre-carbonization step and also controlling the stretching, heating rate, and maximum temperature in the carbonization step, thereby increasing the single-fiber diameter and reducing the size of crystallites in the carbon fiber.

To fulfill the above object, the carbon fiber bundle according to the present invention has the following features.

(1) A carbon fiber bundle having a strand tensile strength of 4.5 GPa or more and 6.5 GPa or less, a strand tensile modulus of 400 GPa or more, a size of crystallites of 4.0 nm or more and 4.7 nm or less, and a single-fiber diameter of 5.2 $\mu$m or more and 6.2 $\mu$m or less and being substantially non-twisted.

(2) A carbon fiber bundle as set forth in the paragraph (1), wherein the number of unwound bundle fuzz defects is 0.3 per meter or less.

(3) A carbon fiber bundle as set forth in either the paragraph (1) or (2), wherein the number of bobbin release fuzz defects is 6 per 100 m or less.

(4) A carbon fiber bundle as set forth in any one of the paragraphs (1) to (3), wherein the density is 1.84 g/cm$^3$ or less.

(4) A carbon fiber as set forth in any one of the paragraphs (1) to (4), wherein the single-fiber diameter is 5.5 $\mu$m or more and 6.2 $\mu$m or less.

(5) A carbon fiber bundle as set forth in either the paragraph (1) or (2), wherein the strand tensile strength is 4.8 GPa or more and 6.5 GPa or less.

(7) A carbon fiber bundle as set forth in either the paragraph (1) or (2), wherein the strand tensile strength is 5.0 GPa or more and 6.5 GPa or less.

(8) A carbon fiber bundle as set forth in either of the paragraph (1) or (2), wherein the strand tensile strength is 5.5 GPa or more and 6.5 GPa or less.

(9) A prepreg comprising a carbon fiber bundle as set forth in any one of the paragraphs (1) to (8) impregnated with a thermosetting resin wherein the number of prepreg fuzz defects is 7 per 100 m$^2$ or less.

(10) A prepreg comprising a carbon fiber bundle as set forth in any one of the paragraphs (1) to (9) impregnated with a thermosetting resin wherein the thermosetting resin gives a cured product with an elastic modulus of 3.0 GPa or more.

(11) A prepreg comprising a carbon fiber bundle as set forth in any one of the paragraphs (1) to (10) impregnated with a thermosetting resin wherein the thermosetting resin gives a cured product with an elastic modulus of 3.8 GPa or more and 5.5 GPa or less.

(12) A carbon fiber-reinforced composite comprising a carbon fiber bundle as set forth in any one of the paragraphs (1) to (11) and a matrix resin.

(13) A carbon fiber-reinforced composite comprising a carbon fiber bundle as set forth in any one of the paragraphs (1) to (12) and a matrix resin and having a composite 0° compressive strength of 1,200 MPa or more and 1,350 MPa or less and a composite 0° tensile modulus of 245 GPa or more and 270 GPa or less.

ADVANTAGEOUS EFFECTS OF THE INVENTION

The present invention serves to allow the carbon fiber bundle to simultaneously exhibit a high strand strength, strand elastic modulus, and compressive strength while maintaining a high fiber quality grade.

DESCRIPTION OF PREFERRED EMBODIMENTS

The carbon fiber bundle according to the present invention has a strand tensile modulus of 4.5 GPa or more and 6.5 GPa or less. If the strand tensile modulus of the carbon fiber bundle is 4.5 GPa or more, it serves to ensure a good balance with the high single-fiber compressive strength of the carbon fiber bundle according to the present invention and enable the production of a carbon fiber-reinforced composite that can easily maintain a sufficient compressive strength. A higher strand tensile strength is generally better, but from the standpoint of productivity, the upper limit is 6.5 GPa. The strand strength is determined based on the strand tensile test described in the section addressing Examples. To allow the strand tensile strength to be within the above range, it is important to stabilize a polyacrylonitrile based precursor fiber bundle while controlling the temperature and then subject the stabilized fiber bundle to pre-carbonization and carbonization while controlling the temperature and also controlling the stretching ratio.

In addition, it is preferable that the strand strength be 4.8 GPa or more and 6.5 GPa or less. If it is 4.8 GPa or more, it allows the tensile strength of the composite to further improve. A strand strength in this range can be achieved mainly by controlling the maximum carbonization temperature and the stretching ratio in the carbonization step.

Furthermore, it is more preferable for the strand strength to be 5.0 GPa or more and 6.5 GPa or less. If it is 5.0 GPa or more, it allows the tensile strength of the composite to further improve. A strand strength in this range can be achieved mainly by controlling the maximum carbonization temperature, the heating rate in the carbonization step, and the stretching ratio in the carbonization step.

In addition, it is particularly preferable for the strand strength to be 5.5 GPa or more and 6.5 GPa or less. If it is 5.5 GPa or more, it allows the tensile strength of the composite to improve particularly largely. A strand strength in this range can be achieved by controlling the carbonization step and properly adjusting the stabilization temperature and the treatment time so as to enable the formation of a stabilized fiber bundle having a structure, mainly evaluated based on the density of the stabilized fiber bundle, that gives a peak ratio within a specific range in the infrared spectrum of the stabilized fiber bundle measured after the first and the second stabilization sub step. Details of control of such process conditions will be described in the section addressing the production method. It is still more preferable for the strand strength to be 5.8 GPa or more.

The carbon fiber bundle according to the present invention has a strand elastic modulus of 400 GPa or more, preferably 420 GPa or more, more preferably 430 GPa or more, and particularly preferably 440 GPa or more. If the strand tensile modulus is 400 GPa or more, it is preferable because it serves to produce a carbon fiber-reinforced composite having an increased tensile modulus. In addition, generally a higher strand elastic modulus is more desirable, but it is preferable from the standpoint of compressive strength to adjust it so as not to exceed 500 GPa. Normally, the single-fiber compressive strength tends to decrease with an increasing strand elastic modulus as measured in strand tensile test, but even under such conditions, both of the aforementioned properties can be realized simultaneously according to the present invention. To allow the strand elastic modulus to be within the above range, it is necessary to control it, for example, by enhancing the orientation parameter in the polyacrylonitrile based precursor fiber or by increasing the stretching ratio in the pre-carbonization step and the carbonization step as well as the maximum temperature in the carbonization step.

The carbon fiber bundle according to the present invention has a size of crystallites of 4.0 nm or more, preferably 4.1 nm or more, and more preferably 4.2 nm or more. If the size of crystallites is less than 4.0 nm, it is necessary that a high degree of stretching be performed to increase the orientation parameter in the carbonization step in order to ensure a required elastic modulus. However, it may lead to a deteriorated fiber quality grade. If the size of crystallites is 4.0 nm or more, it serves for simultaneous achievement of a required compressive strength of the carbon fiber bundle, strand elastic modulus in strand tensile testing, and fiber quality grade on fuzz of the carbon fiber. On the other hand, the single-fiber compressive strength can decrease if the size of crystallites is too large, and therefore, adjustments are made so that the size of crystallites is 4.7 nm or less, preferably 4.5 nm or less, and more preferably 4.4 nm or less. This means that the size of crystallites should be 4.0 nm or more and 4.7 nm or less, preferably 4.1 nm or more and 4.5 nm or less, and more preferably 4.2 nm or more and 4.4 nm or less.

In general, the single-fiber compressive strength tends to decrease as the size of crystallites in the carbon fiber increases. However, the carbon fiber bundle according to the present invention shows both a large size of crystallites and a high single-fiber compressive strength. For the present invention, the size of crystallites can be determined by the wide angle X-ray diffraction method described in the section addressing Examples. To control the size of crystallites within the above range, it is necessary to, for example, increase the maximum temperature in the carbonization step and increase the stretching ratio in the carbonization step.

The carbon fiber bundle according to the present invention has a single-fiber diameter of 5.2 $\mu$m or more. The

single-fiber diameter of a carbon fiber bundle is determined by the method described in the section addressing Examples. If the cross-sectional shape of a single fiber is not a perfect circle, the equivalent circle diameter is used instead. The equivalent circle diameter of a single fiber is defined as the diameter of a perfect circle having a cross-sectional area equal to the measured cross-sectional area of the single fiber.

When producing a prepreg, the impregnating property depends on the single-fiber diameter and therefore, a larger single-fiber diameter enables the efficient production of a composite. Furthermore, the breaking load per single fiber depends on the strand strength and the cross-sectional area of the single-fiber, and accordingly, the single-fiber diameter affects the breaking load per single fiber. In addition, the single-fiber diameter affects the fiber quality grade because fuzz defects caused by abrasion during the production process decreases with an increasing single-fiber diameter.

If the single-fiber diameter is 5.2 $\mu$m or more, it tends to ensure a higher fiber quality grade when producing a carbon fiber bundle or when processing it into a carbon fiber-reinforced composite. The single-fiber diameter is preferably 5.3 $\mu$m or more, and more preferably 5.5 $\mu$m or more. If the single-fiber diameter is too large, reactions may occur unevenly in the single fiber during the stabilization and carbonization process, possibly leading to deterioration in the strand strength, strand elastic modulus, etc. Thus, it is adjusted to 6.2 $\mu$m or less. This means that te single-fiber diameter should be 5.2 nm or more and 6.2 nm or less, preferably 5.3 nm or more and 6.2 nm or less, and more preferably 5.5 nm or more and 6.2 nm or less.

The single-fiber diameter can be properly adjusted by controlling the rate of discharge from the spinneret during the spinning of the precursor fiber bundle for carbon fiber or the stretching ratio in appropriate steps.

The carbon fiber bundle according to the present invention is substantially non-twisted. For a carbon fiber bundle, "substantially non-twisted" means that there is no twist at all or that, even if twist is present, it is 0.5 turns or less per meter. When the carbon fiber bundle is non-twisted, the carbon fiber bundle tends to have high spreadability when used as reinforcing fiber for carbon fiber-reinforced composites, often leading to a carbon fiber-reinforced composite having superior physical properties and fiber quality grade.

For the present invention, it is preferable for the carbon fiber bundle to have a density of 1.84 g/cm$^3$ or less. A lower density leads to an increased specific strength and specific modulus, thereby enabling more efficient production of a carbon fiber-reinforced composite. If the density is 1.84 g/cm$^3$ or less, it tends to enable more efficient production of a carbon fiber-reinforced composite. The density is more preferably 1.83 g/cm$^3$ or less and still more preferably 1.82 g/cm$^3$ or less.

For the carbon fiber bundle according to the present invention, the number of unwound bundle fuzz defects in a carbon fiber bundle is preferably 0.3 per meter or less, more preferably 0.2 per meter or less, and still more preferably 0.1 per meter or less. As the number of unwound bundle fuzz defects in a carbon fiber bundle increases, it can lead to a carbon fiber-reinforced composite suffering from a larger decrease in higher-order processability, and accordingly, the carbon fiber-reinforced composite is likely to be lower in compressive strength. If the number of unwound bundle fuzz defects in carbon fiber is 0.3 per meter or less, the resulting carbon fiber-reinforced composite tends to maintain satisfactory levels of higher-order processability and compressive strength.

The number of unwound bundle fuzz defects is measured by the method described in the section addressing Examples. In order to adjust the number of unwound bundle fuzz defects per meter of a carbon fiber bundle to the above range, it is necessary to control the stretching ratio and the carbonization temperature in the carbonization step while controlling the stretching ratio in the pre-carbonization step, which will be described later.

For the carbon fiber bundle according to the present invention, the number of bobbin release fuzz defects in a carbon fiber bundle is preferably 6 per 100 meters or less, more preferably 5 per 100 meters or less, and still more preferably 4 per 100 meters or less. As the number of bobbin release fuzz defects in a carbon fiber bundle increases, it can lead to a carbon fiber-reinforced composite suffering from a larger decrease in higher-order processability or a carbon fiber-reinforced composite suffering more heavily from fiber breakage attributed to compressive stress, which can act as a fracture origin to cause a decrease in the compressive strength of the carbon fiber-reinforced composite. If the number of bobbin release fuzz defects in a carbon fiber bundle is 6 per 100 meters or less, the resulting carbon fiber-reinforced composite tends to maintain satisfactory levels of higher-order processability and compressive strength.

The number of bobbin release fuzz defects is measured by the method described in the section addressing Examples. In order to adjust the number of bobbin release fuzz defects per 100 meters of a carbon fiber bundle to the above range, it is necessary to control the stretching ratio and the carbonization temperature in the carbonization step while controlling the stretching ratio in the pre-carbonization step, which will be described later.

The prepreg according to the present invention is a prepreg that includes a carbon fiber bundle as described above that is impregnated with a thermosetting resin. For the prepreg, the number of prepreg fuzz defects is preferably 7 per 100 m$^2$ or less, more preferably 3 per 100 m$^2$ or less, and still more preferably 1 per 100 m$^2$ or less. As the number of prepreg fuzz defects increases, it can lead to a carbon fiber-reinforced composite suffering more heavily from fiber breakage, which can act as a fracture origin to cause a decrease in the tensile strength, compressive strength, etc., of the carbon fiber-reinforced composite. If the number of prepreg fuzz defects is 7 per 100 m$^2$ or less, the resulting carbon fiber-reinforced composite tends to maintain satisfactory levels of higher-order processability, tensile strength, and compressive strength.

The number of prepreg fuzz defects is measured by the method described in the section addressing Examples. In order to adjust the number of prepreg fuzz defects per 100 $m^2$ to the above range, it is necessary to control the stretching ratio and the carbonization temperature in the carbonization step while controlling the stretching ratio in the pre-carbonization step, which will be described later.

The prepreg according to the present invention is a prepreg that includes a carbon fiber bundle as described above that is impregnated with a thermosetting resin. The thermosetting resin is preferably one that gives a cured product having an elastic modulus of 3.0 GPa or more, more preferably 3.2 GPa or more, and still more preferably 3.8 GPa or more. If the cured product of the thermosetting resin is high in elastic modulus, it serves to produce a carbon fiber-reinforced composite containing a carbon fiber bundle having a satisfactorily high single-fiber compressive strength and accordingly, the carbon fiber-reinforced composite can exhibit a higher overall compressive strength. If the cured product of the thermosetting resin has an elastic modulus of 3.0 GPa or more, it leads to a carbon fiber-reinforced composite that has a satisfactorily high compressive strength. For the thermosetting resin, the elastic modulus of its cured product is preferably as high as possible, but the practical higher limit is 7.0 GPa, more preferably 6.7 GPa, and still more preferably 5.5 GPa. There are no specific limitations on the type of thermosetting resin to use, and good examples include epoxy resins, vinyl ester resins, phenolic resins, benzoxazine resins, bismaleimide resins, cyanate ester resins, and polyimide resins. Among these, epoxy resins are preferable due to their high handleability in an uncured state and their curability.

Examples of such epoxy resins include glycidyl ether type epoxy resins such as bisphenol A type epoxy resins, bisphenol F type epoxy resins, bisphenol S type epoxy resins, biphenyl type epoxy resins, naphthalene type epoxy resins, novolac type epoxy resins, epoxy resins having fluorene backbones, epoxy resins formed from copolymers of phenol compounds and dicyclopentadiene, diglycidyl resorcinol, tetrakis(glycidyloxyphenyl) ethane, and tris(glycidyloxyphenyl) methane; and glycidylamine type epoxy resins such as tetraglycidyldiaminodiphenyl methane, triglycidyl aminophenol, triglycidyl aminocresol, and tetraglycidyl xylenediamine. These epoxy resins may be used singly or as a combination of a plurality thereof.

As the curing agent for epoxy resin, any substance that can cure the epoxy resin may be used without particular limitation and good examples thereof include amines such as aromatic amines and alicyclic amines, and others such as acid anhydrides, polyaminoamides, organic acid hydrazides, and isocyanates. The use of amine based curing agents is preferable because they can produce cured resins having good mechanical properties and high heat resistance. Useful amine based curing agents include aromatic amines such as diaminodiphenyl sulfone and diaminodiphenyl methane, and aliphatic amines such as dicyandiamide, derivatives thereof, and hydrazide compounds.

These curing agents may be used in combination with a curing accelerator. Examples of good curing accelerators to be used in combination include urea based ones, imidazole based ones, and Lewis acid based catalysts. In particular, the use of urea compounds is preferable from the standpoint of the balance between their storage stability and catalytic activity. Examples of such urea compounds include N,N-dimethyl-N'-(3,4-dichlorophenyl)urea, toluenebis(dimethylurea), 4,4'-methylenebis(phenyldimethylurea), and 3-phenyl-1,1-dimethylurea.

A prepreg is a sheet-like intermediate material that contains a carbon fiber bundle and a thermosetting resin. Such a prepreg can be produced by impregnating a carbon fiber bundle with a thermosetting resin. Useful impregnation methods include the wet process and the hot melt process (dry process).

In the wet process, a thermosetting resin is dissolved in a solvent such as methyl ethyl ketone and methanol to prepare a solution, and a carbon fiber bundle is immersed in it, followed by pulling up the carbon fiber bundle and evaporating the solvent from the carbon fiber bundle using an oven etc. to achieve the impregnation of the carbon fiber bundle with the epoxy resin composition. The hot melt process may include a step in which a thermosetting resin having a viscosity reduced by heating is used for direct impregnation of a carbon fiber bundle or a step in which a thermosetting resin is first spread over pieces of release paper or the like to form film sheets, followed by laying it on one surface or on both surfaces of a carbon fiber bundle and applying heat and pressure to impregnate the carbon fiber bundle with the resin. Here, a single carbon fiber bundle may be used, or multiple carbon fiber bundles may be paralleled and combined for use.

The carbon fiber-reinforced composite according to the present invention is a composite including a carbon fiber bundle as described above and a matrix resin. The matrix resin to use may be a cured product of a thermosetting resin, a thermoplastic resin, or a mixture thereof. In the case of using a thermosetting resin, it may be produced via a prepreg as described above. In that case, the use a thermosetting resin that gives a cured product with an elastic modulus of 3.0 GPa or more as described above is preferable from the standpoint of providing a carbon fiber-reinforced composite with a higher compressive strength. There are no specific limitations on the type of thermosetting resin to use, and appropriate ones may be selected from those described above and used in combination.

The carbon fiber-reinforced composite according to the present invention is a carbon fiber-reinforced composite that is produced using a prepreg as described above that includes a carbon fiber bundle impregnated with a thermosetting resin. It preferably has a composite 0° compressive strength of 1,200 MPa or more, more preferably 1,220 MPa or more, and still more preferably 1,240 MPa or more, and it preferably has a composite 0° tensile modulus of 245 GPa or more, more preferably 250 GPa or more, and still more preferably 255 GPa or more. If using a carbon fiber-reinforced composite that are high in both the composite 0° compressive strength and the composite 0° tensile modulus, it serves to provide a carbon fiber-reinforced composite that can form a molded article having lighter weight and exhibiting superior physical properties. If it has both a composite 0° compressive strength of 1,200 MPa or more and a composite 0° tensile modulus of 245 GPa or more, the resulting carbon fiber-reinforced composite will serve satisfactorily for weight reduction and physical property improvement. The composite 0° compressive strength is preferably as high as possible, but the practical higher limit is 1,350 GPa, more preferably 1,330 GPa, and still more preferably 1,310 GPa. Furthermore, the composite 0° elastic modulus is also preferably as high as possible, but the practical higher limit is 270 GPa, more preferably 265 GPa, and still more preferably 260 GPa.

Described next is the production method for producing the carbon fiber bundle according to the present invention.

When carrying out the production of the carbon fiber bundle, a polyacrylonitrile based precursor fiber bundle is formed first. For the production of a polyacrylonitrile based precursor fiber bundle, it is preferable to use a polyacrylonitrile copolymer as raw material. Here, it should be noted that for the production method for producing the carbon fiber bundle according to the present invention, the term "polyacrylonitrile copolymer" refers to one in which at least acrylonitrile is the main component of the copolymer. The term "main component" refers to the component that accounts for 90 to 100 mass% of the polymer. From the standpoint of promoting the stabilization process, examples of monomers that can be used as copolymer components include those containing at least one carboxylic acid group or one amide group. Examples of monomers containing carboxylic acid groups include acrylic acid, methacrylic acid, itaconic acid, their alkali metal salts, and ammonium salts. Furthermore, an example of a monomer containing an amide group is acrylamide.

For the production of a polyacrylonitrile based precursor fiber bundle, an appropriate one may be selected from among the generally known polymerization methods as a process for producing the polyacrylonitrile copolymer.

For the production of a polyacrylonitrile based precursor fiber bundle, either the dry-jet wet spinning technique or the wet spinning technique may be used as the spinning method, but the use of the dry-jet wet spinning technique is preferable because it is advantageous for producing a carbon fiber bundle having a desired strand strength. The spinning process includes a spinning step in which spinning is performed by discharging a spinning dope solution into a coagulation bath through a spinneret, a washing step in water in which the fiber resulting from the spinning step is washed in a water bath, a water bath stretching step in which the fiber bundle resulting from the washing step in water is stretched in a water bath, and a drying and heat treatment step in which the fiber bundle resulting from the water bath stretching step is subjected to drying and heat treatment. If required, a steam stretching step may be included in which the fiber bundle resulting from the drying and heat treatment step is stretched in steam. Here, the order of the steps may be rearranged as appropriate.

The spinning dope solution is prepared by dissolving the aforementioned polyacrylonitrile copolymer in a solvent that can dissolve the polyacrylonitrile copolymer, which may be an organic solvent such as dimethyl sulfoxide, dimethyl formamide, and dimethyl acetamide, or an aqueous solution of nitric acid, zinc chloride, sodium rhodanide, or the like.

It is preferable for the aforementioned coagulation bath to contain the same solvent as used in the spinning dope solution, such as dimethyl sulfoxide, dimethyl formamide, and dimethyl acetamide, along with a coagulant. The coagulant to use may be one that does not dissolve the aforementioned polyacrylonitrile copolymer and is compatible with the solvent present in the spinning dope solution. Specifically, it is preferable to adopt water as the coagulant.

For the water washing bath used in the aforementioned washing step in water, it is preferable to adopt a multiple stage type water washing bath that are controlled at temperatures in the range of 30°C to 98°C. Here, the stretching ratio adopted in the water bath stretching step is preferably 2 to 6.

After the water bath stretching step, it is preferable for the fiber bundle to be provided with an oil agent containing silicone or the like with the aim of preventing the adhesion between single-fibers. Such a silicone oil agent preferably contains modified silicone, which is preferably amino-modified silicone having high heat resistance.

For the drying and heat treatment step, a generally known method may be used. For example, the drying temperature may be in the range of 100°C to 200°C.

After carrying out the aforementioned washing step in water, water bath stretching step, oil agent application step, and drying and heat treatment step, stretching in steam is performed if required, thereby providing a polyacrylonitrile based precursor fiber bundle that is suitable for producing the carbon fiber bundle according to the present invention. It is preferable for the stretching in steam to be carried out in pressurized steam to a stretching ratio of 2 to 6.

The single-fiber fineness of the polyacrylonitrile based precursor fiber bundle is preferably in the range of 0.4 to 1.5 dtex, more preferably 0.5 to 1.4 dtex, and still more preferably 0.6 to 1.3 dtex, from the standpoint of allowing the carbon fiber bundle to have an enhanced strand strength.

In the method for producing the carbon fiber bundle, a polyacrylonitrile based precursor fiber bundle is subjected to a stabilization step, a pre-carbonization step, and a carbonization step, thereby providing a carbon fiber bundle.

For the production method for producing the carbon fiber bundle according to the present invention, the stabilization step refers to one designed for performing heat treatment of the polyacrylonitrile based precursor fiber bundle in an oxygen-containing atmosphere at 200°C to 300°C. The treatment time to use in the stabilization step can be selected appropriately from the range of preferably 10 to 100 minutes, but for the purpose of obtaining a carbon fiber bundle that exhibits an improved strand tensile strength in the strand tensile test, the treatment time in the stabilization step is set in such a manner that the resulting stabilized fiber has a specific gravity of preferably 1.30 to 1.36, and more preferably 1.31 to 1.35. A more preferable treatment time in the stabilization step may depend on the stabilization temperature. If the specific gravity of the stabilized fiber is 1.30 or more, it allows the resulting carbon fiber bundle to exhibit satisfactory physical properties including strand elastic modulus, whereas if the specific gravity is 1.36 or less, it ensures an increased strand tensile strength. The specific gravity of the stabilized fiber bundle is controlled by changing the stabilization treatment time and the stabilization temperature.

In order that a carbon fiber bundle exhibiting an improved strand tensile strength in the strand tensile test may be obtained by the production method for the carbon fiber bundle according to the present invention, it is preferable, particularly in the case where a polyacrylonitrile based precursor fiber bundle is subjected to the stabilization step, that the process conditions be controlled in such a manner that the resulting stabilized fiber bundle will give an infrared spectrum in which the ratio of the peak intensity at 1,453 $cm^{-1}$ to the peak intensity at 1,370 $cm^{-1}$ is in the range of 0.70 to 0.75 while at the same time the ratio of the peak intensity at 1,254 $cm^{-1}$ to the peak intensity at 1,370 $cm^{-1}$ in the infrared spectrum is in the range of 0.50 to 0.65. The peak at 1,453 $cm^{-1}$ in the infrared spectrum is attributed to alkene and it decreases with the progression of the stabilization treatment. The peak at 1,370 $cm^{-1}$ and the peak at 1,254 $cm^{-1}$ are attributed to the stabilized structure and they increase with the progression of the stabilization reaction. In addition, it is preferable for the stabilization conditions to be set up in such a manner that the ratio of the peak intensity at 1,254 $cm^{-1}$ to the peak intensity at 1,370 $cm^{-1}$ is to be 0.50 to 0.65. This peak intensity ratio decreases with the progression of the stabilization treatment, and in particular, a large decrease occurs in the initial stage. Depending on the stabilization conditions, however, the peak intensity ratio may not decrease down to 0.65 or less even when the treatment is performed for a prolonged time.

To allow both of these peak intensity ratios to be in the desired ranges, basically the treatment conditions are set up focusing mainly on the facts that the copolymer component should account for only a small proportion in the polyacrylonitrile based copolymer present in the precursor fiber bundle, that the precursor fiber bundle should have a high orientation parameter of crystallites, that the precursor fiber bundle should have a decreased single-fiber fineness, and that the temperature used in the stabilization step should be increased in the latter half of the step. It is preferable that the precursor fiber bundle for polyacrylonitrile based carbon fiber be subjected to stabilization performed for 8 to 25 minutes until the ratio of the peak intensity at 1,453 $cm^{-1}$ to the peak intensity at 1,370 $cm^{-1}$ in the infrared spectrum comes into the range of 0.98 to 1.10 (first stabilization sub step), followed by additional stabilization performed for 5 to 20 minutes at a temperature higher than that of the first stabilization sub step until the ratio of the peak intensity at 1,453 $cm^{-1}$ to the peak intensity at 1,370 $cm^{-1}$ in the infrared spectrum has reached the range of 0.70 to 0.75 while at the same time the ratio of the peak intensity at 1,254 $cm^{-1}$ to the peak intensity at 1,370 $cm^{-1}$ in the infrared spectrum has reached the range of 0.50 to 0.65 (second stabilization sub step). To shorten the stabilization time in the second stabilization sub step, it may be effective to adjust the stabilization temperature to a high value, but the optimum stabilization temperature depends on the properties of the precursor fiber bundle. The adjustment of the stabilization temperature preferably to 260°C to 290°C is preferable to allow the peak intensity ratios in the infrared spectrum to be controlled in the aforementioned ranges. The stabilization temperature does not need to be constant and may be set in multiple temperature stages. To obtain a carbon fiber bundle having an increased strand strength, it is preferable to adopt a higher stabilization temperature and a shorter stabilization time. In the first stabilization sub step, it is preferable that stabilization be performed at a stabilization temperature that allows the ratios to come in the aforementioned ranges within a stabilization time of 10 to 25 minutes.

The stabilization time referred to herein means the time period over which the fiber stays in the stabilization furnace, and the stabilized fiber bundle refers to the fiber bundle that has resulted from the stabilization step and is not yet subjected to the pre-carbonization step. In addition, the peak intensity referred to herein means the absorbance at a particular wavelength determined by sampling a small amount of a stabilized fiber bundle, subjecting it to infrared spectrum analysis, and applying baseline correction to the spectrum obtained, with the spectrum remaining unamended by peak splitting etc. Here, the sample is diluted with KBr to a concentration of 0.67 mass% before being subjected to measurement. Each time the stabilization conditions are changed, infrared spectrum analysis should be newly performed in this way to provide results to be used for examination of the conditions. If the conditions are controlled appropriately so that the infrared spectrum peak intensity ratios of the stabilized fiber bundle sample come in desirable ranges, it enables the production of a carbon fiber bundle that has an appropriately adjusted strand strength.

For the present invention, the stabilization step refers to a step in which a precursor fiber bundle is subjected to heat treatment in an oxygen-containing atmosphere at 200°C to 300°C. For the stabilization step, it is preferable the total treatment time be set appropriately in the range of 15 to 40 minutes. In addition, for the purpose of obtaining a carbon fiber bundle with an improved strand strength, the treatment time in the stabilization step is set preferably in such a manner that the resulting stabilized fiber has a specific gravity of 1.28 to 1.32. A more preferable treatment time in the stabilization step depends on the stabilization temperature. If the specific gravity of the stabilized fiber bundle fails to be 1.28 or more, it is likely to lead to a carbon fiber bundle having a decreased strand strength in some cases. If the specific gravity of the stabilized fiber bundle is 1.32 or less, it can ensure an increased strand strength. The specific gravity of the stabilized fiber bundle is adjusted by controlling the treatment time and the stabilization temperature used in the stabilization step. In addition, the switching from the first stabilization sub step to the second stabilization sub step is implemented preferably at a time point at which the specific gravity of the fiber bundle is in the range of 1.21 to 1.23. Even in doing this, adjusting the aforementioned intensity ratios in the infrared spectrum to the specified ranges should be prioritized in controlling the conditions for the stabilization step. The preferable ranges of the treatment time and the stabilization temperature in the stabilization step can vary depending on the characteristics of the precursor fiber bundle and the copolymer composition of the polyacrylonitrile based polymer.

In the pre-carbonization step, which is designed to perform preliminary carbonization of the fiber bundle resulting from the stabilization step, the resulting stabilized fiber bundle is subjected to heat treatment in an inert atmosphere at a maximum temperature of 500°C to 1,000°C. If the maximum temperature in the pre-carbonization step is 500°C or higher, it serves to allow the pre-carbonized fiber bundle to be carbonized satisfactorily in the subsequent carbonization step without suffering from breaks due to thermal decomposition. There is no particular upper limit on the maximum temperature in the pre-carbonization step, but it is preferably 1,000°C or less in order to allow to remain at or below the carbonization temperature used in the subsequent carbonization step. In addition, the stretching ratio in the pre-carbonization step is preferably 1.020 to 1.090. It is more preferably 1.030 to 1.050. In general, a higher stretching ratio in the pre-carbonization step is likely to lead to a carbon fiber having a higher strand strength and a higher strand elastic modulus, although it can also cause increased fuzz generation. A stretching ratio of 1.020 or higher is sufficient to provide a carbon fiber bundle having an enhanced strand strength and strand elastic modulus.

In the carbonization step, which is designed to perform carbonization of the pre-carbonized fiber bundle, the resulting pre-carbonized fiber bundle is subjected to heat treatment in an inert atmosphere at a maximum temperature of preferably 2,300°C to 2,500°C, more preferably 2,310°C to 2,400°C, and still more preferably 2,330°C to 2,380°C.

In general, a higher maximum temperature in the carbonization step leads to a higher size of crystallites and better orientation to increase the strand elastic modulus, thereby ensuring the production of a carbon fiber bundle having a lower single-fiber compressive strength. A carbonization temperature of 2,300°C or more is sufficient to promote carbonization to a satisfactory degree and increase the size of crystallites, whereas a temperature of 2,500°C or less is sufficient to allow the carbon fiber bundle to maintain an appropriate single-fiber compressive strength.

Furthermore, in the production method for producing the carbon fiber bundle according to the present invention, it is preferable that the heating rate (°C/min) be controlled at 250°C/min to 500°C/min in the carbonization temperature range of 1,000°C to 2,400°C in the carbonization step. If the heating rate in the carbonization step is controlled at 250°C/min to 500°C/min, it serves to facilitate the control of structural formation in the carbonization step, and accordingly, uniform tension can be applied to the fiber bundle, making it easier to perform stretching in the carbonization step without compromising the product fiber quality grade. Here, the heating rate (°C/min) is defined as follows: {maximum temperature reached in carbonization furnace (°C) - inlet temperature of carbonization furnace (°C)} / processing time (min).

The heating rate used in the carbonization step is preferably 250°C/min to 500°C/min, and more preferably 300°C/min to 400°C/min. If the heating rate in the carbonization step is less than 250°C/min, it leads to difficulty in improving the productivity. If the heating rate in the carbonization step is more than 500°C/min, the thermal treatment may become uneven across the fiber bundle, causing significant tension distribution within the fiber bundle, which in turn possibly works to deteriorate the fiber quality grade and makes it difficult to simultaneously achieve a high mechanical quality and a high fiber quality grade.

Furthermore, in the production method for producing the carbon fiber bundle according to the present invention, it is preferable that the time period for treatment at the maximum temperature in the carbonization step be controlled at 120 to 300 seconds. If the time period for treatment at the maximum temperature in the carbonization step is controlled at 120 to 300 seconds, it serves to facilitate the control of the structural formation of crystallites in the carbonization step, and accordingly, this makes it easier to improve the elastic modulus without compromising the fiber quality grade. It is preferable that the time period for treatment at the maximum temperature in the carbonization step be 150 to 280 seconds, more preferably 180 to 250 seconds. If the time period for treatment at the maximum temperature in the carbonization step is less than 120 seconds, crystallite growth may not proceed to a sufficient size, making it difficult to achieve a desired mechanical quality. If the time period for treatment at the maximum temperature in the carbonization step is more than 300 seconds, crystallite growth is likely to proceed to an excessive size, making it difficult to simultaneously achieve a high mechanical quality and a high fiber quality grade.

For the carbonization step, furthermore, the stretching ratio of the pre-carbonized fiber bundle is preferably 0.940 to 0.995. It is more preferably 0.945 to 0.980. In general, a higher stretching ratio in the carbonization step is likely to lead to a carbon fiber having a higher strand strength and strand elastic modulus, although it can also cause increased fuzz generation. If it is 0.940 or higher, it is a sufficient temperature to provide a carbon fiber bundle having an enhanced strand strength and strand elastic modulus. If the stretching ratio and the heating rate are jointly controlled in the carbonization step, it serves to simultaneously achieve the enhancement in the strand strength and strand elastic modulus and the production of a carbon fiber bundle having a high fiber quality grade.

The carbon fiber bundle obtained as described above is preferably subjected to oxidation treatment, which serves to introduce an oxygen-containing functional group. For the production method for producing the carbon fiber bundle according to the present invention, useful surface treatment methods include gas phase oxidation, liquid phase oxidation, and liquid phase electrolytic oxidation, of which liquid phase electrolytic oxidation is preferably adopted from the standpoint of ensuring a high productivity and uniform treatment. For the production method for producing the carbon fiber bundle according to the present invention, there are no specific limitations on the technique to use for liquid phase electrolytic oxidation and a generally known one may be adopted appropriately.

It is preferable that such electrolytic treatment be followed by sizing treatment in order to impart convergency to the carbon fiber bundle obtained above. In regard to the sizing agent to use, an appropriate sizing agent with a high compatibility with the matrix resin is selected taking the type of the matrix resin used in the composite into consideration. From the standpoint of achieving both high abrasion resistance and good resin impregnating property, the amount of the adhered sizing agent is preferably 0.5 to 2.0 mass% relative to the total amount, which accounts for 100 mass%, of the entire carbon fiber bundle including the sizing agent.

EXAMPLES

The methods adopted to measure the various physical property values to use in the evaluation for the present invention are described below.

<Strand tensile test of carbon fiber bundle>

The strand tensile modulus and the strand tensile strength of a carbon fiber bundle were determined in accordance with JIS R7608 (2008) "Strand test method." Measurements were taken from seven strand samples and the arithmetic average of the measurements were adopted as the strand strength, strand elastic modulus, and initial elastic modulus of the carbon fiber bundle determined from the strand tensile test. In this test, the strand elastic modulus was measured in the strain range of 0.1% to 0.6%. Here, the S-S curve obtained from the tensile test was fitted to the quadratic function $y = ax^2 + bx + c$, where x represents strain while y represents stress (in GPa) in the range of $0 \leq y \leq 3$, and the coefficient b in the linear term was adopted as the initial elastic modulus in the strand tensile test. Strain was measured using an extensometer. Test specimens were prepared as described below. A carbon fiber bundle was impregnated with the resin composition specified below and cured by heat treatment at a temperature of 130°C for 35 minutes, thereby providing a test specimen.

[Resin composition]

- 3,4-epoxycyclohexylmethyl-3,4-epoxy-cyclohexane-carboxylate (100 parts by mass)
- boron trifluoride monoethylamine (3 parts by mass)
- acetone (4 part by mass)

As the above 3,4-epoxycyclohexylmethyl-3,4-epoxy-cyclohexane-carboxylate, Celoxide P2021P (manufactured by Daicel Corporation) was used.

<Size of crystallites>

Fibers in a carbon fiber bundle under examination were paralleled and bound using a collodion-alcohol solution to prepare a test specimen of a square prism having a length of 4 cm and a base of 1 mm $\times$ 1 mm. The test specimen prepared above was examined using a wide angle x-ray diffraction apparatus under the conditions described below.

- X-ray source: CuK$\alpha$ ray (tube voltage 40 kV, tube current 30 mA)
- detector: goniometer + monochromator + scintillation counter
- scanning range: $2\theta = 10°$ to $40°$
- scanning mode: step scan, step unit 0.01°, scanning speed 1°/min

For the peak appearing in the vicinity of $2\theta = 25°$ to $26°$ in the resulting diffraction pattern, peak fitting was performed using a Gaussian function. Its half-width was determined, and the value obtained was used to calculate the size of crystallites by the Scherrer equation given below.

$$\text{size of crystallites (nm)} = K\lambda / \beta_0 \cos\theta_B$$

where

K: 1.00, $\lambda$: 0.15418 nm (wavelength of X-ray)

$\beta_0$: - $\beta_1$2)$^{1/2}$ $\beta_0$: ($\beta E^2 - \beta_1^2)^{1/2}$

$\beta_E$: apparent full width at half maximum (measured) rad, $\beta_1$: $1.046 \times 10^{-2}$ rad

$\theta_B$: Bragg diffraction angle

For a test condition, 10 measurements were taken and the average of the measurements taken was adopted as the size of crystallites. The wide-angle x-ray diffraction apparatus used was XRD-6100 (manufactured by Shimadzu Corporation).

<Single-fiber diameter of carbon fiber bundle>

For a carbon fiber bundle under examination that included a large number of carbon monofilaments, the mass per unit length, $A_f$ (g/m), and the specific gravity, $B_f$ (g/cm$^3$), were determined. On the assumption that the carbon fiber has a cross section of a perfect circular shape, the single-fiber diameter ($\mu$m) of the carbon fiber was calculated by the following equation, in which $C_f$ represents the number of filaments contained in the carbon fiber bundle under examination.

$$\text{single-fiber diameter of carbon fiber } (\mu m) = ((A_f / B_f / C_f) / \pi)^{1/2} \times 2 \times 10^3$$

<Intensity ratio in infrared spectrum>

A stabilized fiber sample to be examined was cryogenically ground, and 2 mg of the sample was accurately weighed, mixed well with 300 mg of KBr, placed in a molding jig fixture, and pressed under 40 MPa for 2 minutes in a pressing machine to prepare a pellet for measurement. This pellet was placed in a Fourier-transform infrared spectrometer and subjected to spectral analysis in the range of 1,000 to 2,000 cm$^{-1}$. Here, background correction was performed by subtracting the minimum value in the range of 1,700 to 2,000 cm$^{-1}$ from all intensity values to make the baseline zero. In the Examples and Comparative examples given below, a Fourier-transform infrared spectrometer of Paragon1000, manufactured by Perkin-Elmer, was used.

<Measurement of density of stabilized fiber bundle and carbon fiber bundle>

The densities $B_f$ (g/cm$^3$) of a stabilized fiber bundle and carbon fiber bundle are determined by the Archimedes' method using o-dichlorobenzene as the specific gravity liquid. Measurements were taken from three specimens.

<Quantity of adhered sizing agent>

A carbon fiber bundle coated with a sizing agent of $2.0 \pm 0.5$ g was weighed ($W_1$) (to the fourth decimal place) and left to stand for 15 minutes in an electric furnace (capacity 120 cm$^3$) that was set to a temperature of 450°C and placed in a nitrogen flow of 50 milliliters/min, thereby ensuring complete thermal decomposition of the sizing agent. Then, the carbon fiber bundle was transferred to a container placed in a dry nitrogen flow of 20 liters/min and cooled for 15 minutes, and the weight ($W_2$) of the carbon fiber bundle was measured (to the fourth decimal place), followed by calculating the loss on heating as $W_1$ - $W_2$. This loss on heating was converted into a value in mass% (rounded off to the second decimal place) relative to the weight of the carbon fiber bundle carrying the adhered sizing agent, which accounted for 100 mass%, to give the quantity of the adhered sizing agent (in mass%). Two measurements were taken and their average was adopted to represent the quantity of the adhered sizing agent.

<Unwound bundle fuzz defect>

A bobbin holding a carbon fiber bundle was mounted on a creel, and drawn at 2 m/min with a roller under a tension of 1.6 mN/dtex and taken up on a winder. During this operation, fuzz defects as defined below that occurred between the creel and the roller were counted for 5 minutes, and the number of unwound bundle fuzz defects was calculated by the formula given below. Ten bobbins were examined for the measurement of the number of unwound bundle fuzz defects, and the arithmetic average of the measurements taken was adopted to represent the number of unwound bundle fuzz defects.

Unwound bundle fuzz defect: This defect includes two or less fuzz filaments per 10 mm gauge length, wherein a fuzz filament means a broken carbon fiber thread protruding 5 mm or more from the carbon fiber bundle.

<Bobbin release fuzz defect>

A bobbin holding a carbon fiber bundle was mounted on a creel, and drawn at 2 m/min with a roller under a tension of 1.6 mN/dtex and taken up on a winder. During this operation, fuzz filament groups and fluff balls as defined below that occurred between the creel and the roller were counted for 50 minutes, and the number of bobbin release fuzz defects was calculated by the formula described below. Ten bobbins were examined for the measurement of the number of bobbin release fuzz defects, and the arithmetic average of the measurements taken was adopted to represent the number of bobbin release fuzz defects.

Number of bobbin release fuzz defects (per 100 m) = number of fuzz defects counted (fuzz filament groups + fluff balls) (number) / examined length (m) $\times$ 100

Fuzz filament group: This group includes three or more fuzz filaments per 10 mm gauge length, wherein a fuzz filament is a broken carbon fiber thread protruding 5 mm or more from the carbon fiber bundle.

Fluff ball: A ball with a diameter 5 mm or more containing broken carbon fiber threads that are exposed out of the carbon fiber bundle and entangled.

Here, the diameter of a fluff ball is defined as the longest distance between opposite ends of the fluff ball.

<Test for measuring single-fiber compressive strength of carbon fiber>

The single-fiber compressive strength of a single-fiber composite was measured by the compression fragmentation method according to the steps (A) to (E) described below.

(A) Preparation of resin

In a container, 190 parts by mass of a bisphenol A type epoxy resin compound (Epotohto (registered trademark) YD-128, manufactured by Nippon Steel Chemical Co., Ltd.) and 20.7 parts by mass of diethylenetriamine (manufactured by Wako Pure Chemical Industries, Ltd.) were mixed using a spatula and degassed using an automatic vacuum degassing device.

(B) Sampling of single-fiber from carbon fiber and fixation to mold

A carbon fiber bundle with a length of about 20 cm was divided into four approximately equal portions, and single-fiber specimens were sampled from the four bundles one by one in turn. Specimens were collected as evenly as possible from the entire bundle. Then, pieces of double-sided tape were attached to both ends of a punched mounting sheet, and a sampled single-fiber specimen was fixed to the sheet, with a certain degree of tension applied to the single fiber. Subsequently, a glass plate laid with polyester film (Lumirror (registered trademark), manufactured by Toray Industries, Inc.) was prepared, and a spacer with a thickness of 2 mm was fixed on the film to enable the adjustment of the specimen thickness. The punched mounting sheet carrying a single-fiber specimen fixed thereon is put on the spacer and then, the glass plate laid with polyester film is put similarly on it, with the film-covered surface facing down. To control the embedding depth of the fiber, pieces of tape with a thickness of about 70 $\mu$m were attached to both ends of the film.

(C) From injection to curing of resin

The resin prepared in the aforementioned step (A) was fed into the mold (into the space between the spacer and the film) described in the aforementioned step (B). The mold containing the resin fed above was heated for 5 hours in a oven having a temperature raised in advance to 50°C and then cooled to a temperature of 30°C at a cooling rate of 2.5°C/min. Subsequently, the resin was removed from the mold and cut to provide a test piece with a size of 2 cm $\times$ 7.5 cm $\times$ 0.2 cm. Here, the test piece was cut out in such a manner that the single-fiber was present inside the 0.5 cm width part located across the widthwise centerline.

(D) Measurement of fiber embedding depth

The fiber embedding depth in the test piece prepared in the step (C) above was measured using a laser Raman spectrophotometer (NRS-3200, manufactured by JASCO Corporation) and a 532 nm notch filter. A laser beam was focused on the single-fiber surface and the stage height was adjusted in such a manner that the laser beam diameter was minimized. The height was adopted as the height A ($\mu$m). Then, a laser beam was focused on the test piece surface and the stage height was adjusted in such a manner that the laser beam diameter was minimized. The height was adopted as the height B (μm). Using the refractive index 1.732 of the resin, which was measured with the laser described above, the resin embedding depth d (μm) was calculated by the following equation.

$$d = (A - B) \times 1.732 \qquad (1)$$

(E) Four-point bending test

The test piece prepared in the step (C) above was subjected to compressive strain by four-point bending using a jig with outer indenter interval of 50 mm and an inner indenter interval of 20 mm. While increasing the strain stepwise in 0.1% increments, the test piece was observed under a polarizing microscope to measure the number of fiber breaks that occurred in a 5 mm part around the lengthwise center of the test piece. The number of fiber breaks (per 10 mm) was calculated as twice the measured break count. The compressive strain at which the number of fiber breaks averaged over 30 test pieces exceeded 1 per 10 mm was used in combination with the initial elastic modulus to calculate the compressive stress, which was adopted as the single-fiber compressive strength. In addition, the single-fiber composite strain ε (%) was measured using a strain gauge attached to a position approximately 5 mm away in the width direction from the center of the test piece. The final compressive strain $\varepsilon_c$ of a single-fiber of carbon fiber was calculated by the following equation (2) based on the gauge factor κ of the strain gauge, the fiber embedding depth d (μm) determined in the step (D), and a residual strain of 0.14 (%).

$$\varepsilon_c = \varepsilon \times (2/\kappa) \times (1 - d/1,000) - 0.14 \qquad (2)$$

Evaluations were made based on the measured single-fiber compressive strength according to the criteria specified below.

S: 3.1 GPa or more
A: 3.0 GPa or more and less than 3.1 GPa
B: 2.9 GPa or more and less than 3.0 GPa
C: less than 2.9 GPa

< Fiber quality grade of prepreg and number of prepreg fuzz defects>

A prepreg sample was observed over a length of 50 meters in the length direction, and the number of fuzz defects per 100 m$^2$ was calculated. Evaluations in terms of the number of prepreg defects (per 100 m$^2$) were made according to the criteria specified below. A prepreg fuzz defect refers to a fuzz ball having a diameter of 10 mm or more. Here, the diameter of a fuzz ball is defined as the longest distance between opposite ends of the fuzz ball.

S: 3 per 100 m$^2$ or less
A: more than 3 per 100 m$^2$ and 7 per 100 m$^2$ or less
B: more than 7 per 100 m$^2$ and 30 per 100 m$^2$ or less
C: more than 30 per 100 m$^2$

<Elastic modulus measurement for cured product of thermosetting resin>

The resin component of a thermosetting resin was put in a kneader, heated to 150°C while kneading, and further kneaded at that temperature for 1 hour. Then, while kneading is continued, the temperature was reduced to 60°C. Subsequently, a curing agent and a curing accelerator were added and kneading was continued further to provide an thermosetting resin sample in an uncured state. This uncured thermosetting resin sample was defoamed in a vacuum and cured at a temperature of 130°C for 2 minutes in a mold having a 2 mm thick spacer of Teflon (registered trademark) designed for thickness adjustment to 2 mm, thus providing a cured product of the thermosetting resin having a thickness of 2 mm. A test piece having a width of 10 mm and a length of 60 mm was cut out from this cured product, and three point bending test was conducted according to JIS K7171 (1994) under the conditions of a span interval of 32 mm and a crosshead speed of 2.5 mm/minute to determine the elastic modulus. Measurements were taken from five samples (n = 5) and their average was adopted as the elastic modulus of the thermosetting resin.

<Measurement of 0° compressive strength of carbon fiber-reinforced composite and 0° tensile modulus of carbon fiber-reinforced composite>

The main thermosetting resin components, excluding the curing agent and curing accelerator, were mixed in a kneader and stirred for 1 hour to prepare a resin composition. The resulting resin composition was then applied to the silicone surface of a silicone-coated release paper sheet to form a resin film. The resulting resin film was wound, with the resin composition side facing outward, around a steel drum having a circumference of about 2.7 m and a surface adjusted to a temperature of 60°C to 70°C. Subsequently, a carbon fiber bundle was unwound from a creel through a traverse and laid along the surface of the resin composition wound on the steel drum. In addition, a similar resin film was spread on top of this, with the resin composition side facing the carbon fiber bundle, and a separate rotating roll was brought in contact with the outer surface of the resin film, followed by pressing it against it to impregnate the fiber bundle with the resin, thereby forming a unidirectional prepreg having a width of 300 mm and a length of 2.7 m. Here, the fiber areal weight of the prepreg was adjusted to 190 to 200 $g/m^2$ by controlling the rotation speed of the drum and the moving rate of the traverse. Multiple prepreg sheets formed in this way were laminated with their fiber directions aligned in the same direction and then treated for 2 hours at a temperature of 130°C under a pressure of 0.3 MPa to cure the resin, thereby producing a laminated sheet (fiber-reinforced composite) having a thickness of 1 mm. From this laminated sheet, test specimens having a thickness of 1 ± 0.1 mm, a width of 12.7 ± 0.13 mm, a length of 80 ± 0.013 mm, and a gauge length of 5 ± 0.13 mm were cut out. Here, reinforcement plates were bonded to both ends of each test specimen (to cover 37.5 mm portion from each end) with an adhesive etc. to leave the gauge length of 5 ± 0.13 mm. The compressive strength of a test specimen was measured at a strain rate of 1.27 mm/min according to ASTM D695 (1996), and the measured value of compressive strength was converted to a fiber volume fraction of 60%. Measurements were taken from six specimens (n = 6) and the average thereof was adopted as the 0° compressive strength of the carbon fiber-reinforced composite according to the present invention. Furthermore, as described in JIS K7017 (1999), this unidirectional reinforced material was cut to a width of 12.7 mm and a length of 230 mm, and glass fiber-reinforced plastic tabs of 1.2 mm with a length of 50 mm were adhered to both ends to prepare a test piece. The test piece prepared in this way was subjected to tensile test using a universal testing machine manufactured by Instron at a crosshead speed of 1.27 mm/min. Thus, the 0° tensile modulus was measured, and the measured tensile modulus value was converted to a fiber volume fraction of 60%. Measurements were taken from six specimens (n = 6) and the average thereof was adopted as the 0° tensile modulus of the carbon fiber-reinforced composite according to the present invention.

This invention is explained more specifically below with reference to examples.

(Example 1)

A polyacrylonitrile copolymer, copolymerized with itaconic acid, was produced through polymerization by the solution polymerization method using dimethyl sulfoxide as solvent, thereby preparing a polyacrylonitrile copolymer. A coagulated fiber bundle was formed by a dry-jet wet spinning process in which a spinning dope solution containing the resulting polyacrylonitrile copolymer was first discharged from a spinneret into air, then allowed to pass through a space of about 4 mm, and introduced into a coagulation bath of a 35 mass% aqueous solution of dimethyl sulfoxide controlled at 3°C. This coagulated fiber bundle was washed in water by an ordinary method and stretched 3.5 times in a double-tank type warm water bath. Then, an amino-modified silicone based silicone oil agent was applied to the aforementioned fiber bundle stretched in a water bath and subjected to drying densification treatment using heated rollers maintained at 160°C. Two of such fiber bundles were combined to include a total of 12,000 single-fibers and stretched 3.7 times in pressurized steam to achieve a total stretching ratio of 13 over the entire spinning process, followed by performing entangling treatment to provide a polyacrylonitrile based precursor fiber bundle with an orientation parameter of crystallites of 93% and a single-fiber fineness of 0.75 dtex containing 12,000 single-fibers. Subsequently, a stabilized fiber bundle was produced by a process in which the polyacrylonitrile based precursor fiber bundle was subjected to stabilization treatment while stretching it at a stretching ratio of 1 in an oven containing an air atmosphere under the conditions of a stabilization temperature of 240°C in the first stabilization sub step and 244°C in the second stabilization sub step while controlling the stabilization time so as to obtain a stabilized fiber having a density of 1.30 $g/cm^3$. Here, the stabilization step conducted in the "first furnace" is the first stabilization sub step and the stabilization step conducted in the "second furnace" is the second stabilization sub step. It should be noted that for both the first stabilization sub step and the second stabilization sub step according to the present invention, there are no particular limitations on the number of stabilization furnaces to use. When the fiber resulting from the first stabilization sub step was examined by infrared spectroscopy, the ratio of the peak intensity at 1,453 $cm^{-1}$ to the peak intensity at 1,370 $cm^{-1}$ was 0.68. When the fiber resulting from the second stabilization sub step was examined by infrared spectroscopy, the ratio of the peak intensity at 1,453 $cm^{-1}$ to the peak intensity at 1,370 $cm^{-1}$ was 0.49, and the ratio of the peak intensity at 1,254 $cm^{-1}$ to the peak intensity at 1,370 $cm^{-1}$ was 0.55. From the resulting stabilized fiber bundle, a pre-carbonized fiber bundle was formed in a nitrogen atmosphere controlled in the temperature range of 300°C to 800°C. The resulting pre-carbonized fiber bundle was subjected to carbonization treatment performed in a nitrogen atmosphere at a properly adjusted maximum temperature, heating rate, and stretching ratio. The stabilization conditions, pre-carbonization conditions, and carbonization conditions adopted above are summarized in Table 1.

[Table 1-1]

Table 1-1]

| | | unit | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| stabilization step | stabilization temperature (first stabilization sub step) | °C | 240 | 240 | 240 | 240 | 240 | 240 | 240 | 250 | 250 | 250 |
| | stabilization temperature (second stabilization sub step) | °C | 244 | 244 | 244 | 244 | 244 | 244 | 244 | 280 | 280 | 280 |
| | peak ratio in infrared spectrum after first stabilization sub step 1,453 cm$^{-1}$/1,370 cm$^{-1}$ | | 0.68 | 0.68 | 0.68 | 0.68 | 0.68 | 0.68 | 0.68 | 1.04 | 1.04 | 1.04 |
| | peak ratio in infrared spectrum after second stabilization sub step 1,453 cm$^{-1}$/1,370 cm$^{-1}$ | | 0.49 | 0.49 | 0.49 | 0.49 | 0.49 | 0.49 | 0.49 | 0.70 | 0.70 | 0.70 |
| | peak ratio in infrared spectrum after second stabilization sub step 1,254 cm$^{-1}$/1,370 cm$^{-1}$ | | 0.55 | 0.55 | 0.55 | 0.55 | 0.55 | 0.55 | 0.55 | 0.61 | 0.61 | 0.61 |
| pre-carbonization step | stretching ratio in pre-carbonization step | - | 1.085 | 1.085 | 1.025 | 1.030 | 1.020 | 1.025 | 1.055 | 1.030 | 1.030 | 1.020 |
| carbonization step | maximum temperature in carbonization step | °C | 2,400 | 2,400 | 2,420 | 2,400 | 2,370 | 2,440 | 2,400 | 2400 | 2420 | 2,370 |
| | heating rate in carbonization step | °C/min | 462 | 318 | 324 | 318 | 311 | 329 | 462 | 462 | 324 | 311 |
| | treatment time at maximum temperature in carbonization step | sec | 132 | 191 | 191 | 191 | 191 | 191 | 132 | 132 | 191 | 191 |
| | stretching ratio in carbonization step | - | 0.990 | 0.970 | 0.985 | 0.987 | 0.965 | 0.983 | 0.990 | 0.988 | 0.988 | 0.965 |

EP 4 660 358 A1

16

[Table 1-2]

[Table 1-2]

| | | unit | Comparative example 1 | Comparative example 2 | Comparative example 3 | Comparative example 4 | Comparative example 5 | Comparative example 6 | Comparative example 7 | Comparative example 8 |
|---|---|---|---|---|---|---|---|---|---|---|
| stabilization step | stabilization temperature (first stabilization sub step) | °C | 240 | 240 | 240 | 240 | 240 | 240 | 240 | 240 |
| | stabilization temperature (second stabilization sub step) | °C | 244 | 244 | 244 | 244 | 244 | 244 | 244 | 244 |
| | peak ratio in infrared spectrum after first stabilization sub step 1,453 $cm^{-1}$/1,370 $cm^{-1}$ | | 0.68 | 0.68 | 0.68 | 0.68 | 0.68 | 0.68 | 0.68 | 0.68 |
| | peak ratio in infrared spectrum after second stabilization sub step 1,453 $cm^{-1}$/1,370 $cm^{-1}$ | | 0.49 | 0.49 | 0.49 | 0.49 | 0.49 | 0.49 | 0.49 | 0.49 |
| | peak ratio in infrared spectrum after second stabilization sub step 1,254 $cm^{-1}$/1,370 $cm^{-1}$ | | 0.55 | 0.55 | 0.55 | 0.55 | 0.55 | 0.55 | 0.55 | 0.55 |
| pre-carbonization step | stretching ratio in pre-carbonization step | - | 1.115 | 1.015 | 1.095 | 1.025 | 1.055 | 1.055 | 1.030 | 1.020 |
| carbonization step | maximum temperature in carbonization step | °C | 2,400 | 2,550 | 2,400 | 2,050 | 2,400 | 2,250 | 2,150 | 2,370 |
| | heating rate in carbonization step | °C/min | 462 | 519 | 462 | 327 | 733 | 462 | 318 | 202 |
| | treatment time at maximum temperature in carbonization step | sec | 132 | 132 | 132 | 191 | 164 | 191 | 191 | 70 |
| | stretching ratio in carbonization step | - | 0.995 | 0.985 | 0.998 | 0.985 | 0.990 | 1.005 | 1.020 | 0.965 |

The resulting carbon fiber bundle was subjected to surface treatment and coated with a sizing agent to provide a final carbon fiber bundle. The quantity of the sizing agent to be applied was adjusted to 1.2 mass%. The carbon fiber bundle produced in this way had a single-fiber diameter of 5.3 $\mu$m, a density of 1.82 g/cm$^3$, and a size of crystallites of 4.2 nm and it was found to have a strand tensile strength of 4.8 GPa, a strand tensile modulus of 438 GPa, and a single-fiber compressive strength of 3.0 GPa, indicating that it had good mechanical properties. In addition, the number of unwound bundle fuzz defects was 0.5 per meter; the number of bobbin release fuzz defects was 10.0 per 100 m; and the number of prepreg fuzz defects was 28 per 100 m$^2$, indicating that it had a sufficiently high fiber quality grade. Results obtained above are summarized in Table 2.

[Table 2-1]

[Table 2-1]

| | unit | Example 1 | Example 2 | Example 3 | Example 4 | Example 5 | Example 6 | Example 7 | Example 8 | Example 9 | Example 10 |
|---|---|---|---|---|---|---|---|---|---|---|---|
| single-fiber diameter | μm | 5.3 | 5.3 | 5.4 | 5.5 | 5.5 | 5.4 | 5.4 | 5.3 | 5.3 | 5.5 |
| density | g/cm$^3$ | 1.82 | 1.82 | 1.84 | 1.83 | 1.84 | 1.84 | 1.83 | 1.85 | 1.87 | 1.84 |
| strand tensile strength | GPa | 4.8 | 5.5 | 5.0 | 5.1 | 5.4 | 4.7 | 4.9 | 5.9 | 6.0 | 5.8 |
| strand tensile modulus | GPa | 438 | 434 | 430 | 442 | 424 | | 425 | 432 | 450 | 427 |
| size of crystallites | nm | 4.2 | 4.2 | 4.3 | 4.2 | 4.2 | 4.5 | 4.2 | 4.4 | 4.4 | 4.2 |
| presence or absence of twist or residual twist | - | non-twisted | non-twisted | non-twisted | non-twisted | non-twisted | non-twisted | non-twisted | non-twisted | non-twisted | non-twisted |
| number of unwound bundle fuzz defects | /m | 0.5 | 0.2 | 0.3 | 0.2 | 0.1 | 0.3 | 0.4 | 0.2 | 0.3 | 0.2 |
| number of bobbin release fuzz defects | /100 m | 10.0 | 4.0 | 5.9 | 4.2 | 2.6 | 6.5 | 7.0 | 4.0 | 5.6 | 4.2 |
| single-fiber compressive strength | GPa | A(3.0) | A(3.0) | A(3.0) | A(3.0) | S(3.1) | B(2.9) | A(3.0) | A(3.0) | A(3.0) | A(3.0) |
| number of prepreg fuzz defects | /100 m$^2$ | B(28) | S(3) | A(6) | S(3) | S(1) | A(7) | B(12) | S(3) | A(4) | S(2) |

[Table 2-2]

[Table 2-2]

| | unit | Comparative example 1 | Comparative example 2 | Comparative example 3 | Comparative example 4 | Comparative example 5 | Comparative example 6 | Comparative example 7 | Comparative example 8 |
|---|---|---|---|---|---|---|---|---|---|
| single-fiber diameter | $\mu$m | 4.9 | 5.4 | 5.1 | 5.5 | 5.4 | 54 | 5.4 | 5.5 |
| density | g/cm$^3$ | 1.84 | 1.85 | 1.84 | 1.78 | 1.83 | 1.83 | 1.82 | 1.83 |
| strand tensile strength | GP a | 5.2 | 4.3 | 5.3 | 5.7 | 4.4 | 4.6 | 4.4 | 5.4 |
| strand tensile modulus | GP a | 432 | 438 | 432 | 377 | 422 | 417 | 420 | 388 |
| size of crystallites | nm | 4.2 | 4.9 | 4.4 | 3.4 | 4.3 | 3.9 | 3.5 | 3.8 |
| presence or absence of twist or residual twist | - | non-twisted | non-twisted | non-twisted | non-twisted | non-twisted | non-twisted | non-twisted | non-twisted |
| number of unwound bundle fuzz defects | /m | 0.7 | 0.6 | 1.5 | 0.2 | 0.5 | 3.3 | 4.0 | 0.2 |
| number of bobbin release fuzz defects | /10 0 m | 13.3 | 11.4 | 28.5 | 2.0 | 10.1 | 41.5 | 54.0 | 2.8 |
| single-fiber compressive strength | GP a | A(3.0) | C(2.8) | A(3.0) | S(4.4) | A(3.0) | S(3.3) | S(4.1) | S(3.5) |
| number of prepreg fuzz defects | /10 0 m$^2$ | C(46) | C(36) | C(129) | S(1) | C(33) | C(150) | C(198) | S(2) |

EP 4 660 358 A1

22

(Example 2)

Except that the heating rate, treatment time at the maximum temperature, and stretching ratio used in the carbonization step were as shown in Table 1, a carbon fiber bundle was produced and subjected to various evaluations in the same manner as in Example 1. Results are summarized in Table 2 and they suggest that the carbon fiber bundle obtained had a high fiber quality grade and good mechanical properties.

(Example 3)

Except that the stretching ratio used in the pre-carbonization step and the maximum temperature, treatment time at maximum temperature, heating rate, and stretching ratio used in the carbonization step were as shown in Table 1, a carbon fiber bundle was produced and subjected to various evaluations in the same manner as in Example 1. Results are summarized in Table 2 and they suggest that the carbon fiber bundle obtained had a sufficiently high fiber quality grade and good mechanical properties.

(Example 4)

Except that the stretching ratio used in the pre-carbonization step and the heating rate, treatment time at maximum temperature, and stretching ratio used in the carbonization step were as shown in Table 1, a carbon fiber bundle was produced and subjected to various evaluations in the same manner as in Example 1. Results are summarized in Table 2 and they suggest that the carbon fiber bundle obtained had a very high fiber quality grade and good mechanical properties.

(Example 5)

Except that the stretching ratio used in the pre-carbonization step and the maximum temperature, treatment time at maximum temperature, heating rate, and stretching ratio used in the carbonization step were as shown in Table 1, a carbon fiber bundle was produced and subjected to various evaluations in the same manner as in Example 1. Results are summarized in Table 2 and they suggest that the carbon fiber bundle obtained had a very high fiber quality grade and very good mechanical properties.

(Example 6)

Except that the stretching ratio used in the pre-carbonization step and the maximum temperature, treatment time at maximum temperature, heating rate, and stretching ratio used in the carbonization step were as shown in Table 1, a carbon fiber bundle was produced and subjected to various evaluations in the same manner as in Example 1. Results are summarized in Table 2 and they suggest that the carbon fiber bundle obtained had a sufficiently high fiber quality grade and sufficiently good mechanical properties.

(Example 7)

Except that the stretching ratio used in the pre-carbonization step was as shown in Table 1, a carbon fiber bundle was produced and subjected to various evaluations in the same manner as in Example 1. Results are summarized in Table 2 and they suggest that the carbon fiber bundle obtained had a sufficiently high fiber quality grade and good mechanical properties.

(Example 8)

Except that the stabilization treatment in the stabilization step was performed with the stabilization temperature and the stabilization time controlled so as to enable the formation of a stabilized structure as shown in Table 1, that the stretching ratio used in the pre-carbonization step was as shown in Table 1, and that the stretching ratio used in the carbonization step was as shown in Table 1, a carbon fiber bundle was produced and subjected to various evaluations in the same manner as in Example 1. Results are summarized in Table 2 and they suggest that the carbon fiber bundle obtained had a high fiber quality grade and good mechanical properties.

(Example 9)

Except that the stabilization treatment in the stabilization step was performed with the stabilization temperature and the stabilization time controlled so as to enable the formation of a stabilized structure as shown in Table 1, that the stretching ratio used in the pre-carbonization step was as shown in Table 1, and that the maximum temperature, treatment time at maximum temperature, heating rate, and stretching ratio used in the carbonization step were as shown in Table 1, a carbon fiber bundle was produced and subjected to various evaluations in the same manner as in Example 1. Results are summarized in Table 2 and they suggest that the carbon fiber bundle obtained had a high fiber quality grade and good mechanical properties.

(Example 10)

Except that the stabilization treatment in the stabilization step was performed with the stabilization temperature and the stabilization time controlled so as to enable the formation of a stabilized structure as shown in Table 1, that the stretching ratio used in the pre-carbonization step was as shown in Table 1, and that the maximum temperature, treatment time at maximum temperature, heating rate, and stretching ratio used in the carbonization step were as shown in Table 1, a carbon fiber bundle was produced and subjected to various evaluations in the same manner as in Example 1. Results are summarized in Table 2 and they suggest that the carbon fiber bundle obtained had a high fiber quality grade and good mechanical properties.

(Example 11)

A prepreg and a carbon fiber-reinforced composite were produced using the carbon fiber bundle prepared in Example 4 in combination with the resin composition described below. When measured, the 0° tensile modulus was found to be 259 GPa and the 0° compressive strength was found to be 1,240 MPa. Physical properties of the carbon fiber-reinforced composite produced in this way are shown in Table 3. In addition, the elastic modulus of a cured resin produced from the same resin composition was measured, and results showed that it had an elastic modulus of 4.4 GPa.

Resin composition:

- liquid-state bisphenol A type epoxy resin (jER (registered trademark) 828, manufactured by Mitsubishi Chemical Corporation): 20 parts by mass
- triglycidyl-m-aminophenol (Araldite (registered trademark) MY0600, manufactured by Huntsman Advanced Materials): 50 parts by mass
- phenol novolac type epoxy (jER (registered trademark) 154, manufactured by Mitsubishi Chemical Corporation: 30 parts by mass

Curing agent:

- dicyandiamide (manufactured by Mitsubishi Chemical Corporation): 6 parts by mass Curing accelerator: 3-(3,4-dichlorophenyl)-1,1-dimethylurea (manufactured by Hodogaya Chemical Co., Ltd.): 3 parts by mass

(Comparative example 1)

Except that the stretching ratio used in the pre-carbonization step and the stretching ratio used in the carbonization step were as shown in Table 1, a carbon fiber bundle was produced and subjected to various evaluations in the same manner as in Example 1. Results are summarized in Table 2, and they suggest that the resulting carbon fiber bundle had good mechanical properties but was small in single-fiber diameter and had an insufficient fiber quality grade.

(Comparative example 2)

Except that the stretching ratio used in the pre-carbonization step and the maximum temperature, heating rate, and stretching ratio used in the carbonization step were as shown in Table 1, a carbon fiber bundle was produced and subjected to various evaluations in the same manner as in Example 1. Results are summarized in Table 2, and they suggest that the resulting carbon fiber bundle had good mechanical properties but was high in density, large in size of crystallites, and had an insufficient strand strength and single-fiber compressive strength, resulting in an insufficient fiber quality grade.

(Comparative example 3)

Except that the stretching ratio used in the pre-carbonization step and the stretching ratio used in the carbonization step were as shown in Table 1, a carbon fiber bundle was produced and subjected to various evaluations in the same manner as in Example 1. Results are summarized in Table 2, and they suggest that the resulting carbon fiber bundle had good mechanical properties but was small in single-fiber diameter, resulting in an insufficient fiber quality grade.

(Comparative example 4)

Except that the stretching ratio used in the pre-carbonization step and the maximum temperature, treatment time at maximum temperature, heating rate, and stretching ratio used in the carbonization step were as shown in Table 1, a carbon fiber bundle was produced and subjected to various evaluations in the same manner as in Example 1. Results are summarized in Table 2, and they suggest that the resulting carbon fiber bundle had a very high fiber quality grade but had an insufficient strand elastic modulus because the maximum temperature in the carbonization step was low.

(Comparative example 5)

Except that the stretching ratio used in the pre-carbonization step and the heating rate and treatment time at maximum temperature used in the carbonization step were as shown in Table 1, a carbon fiber bundle was produced and subjected to various evaluations in the same manner as in Example 1. Results are summarized in Table 2, and they suggest that the resulting carbon fiber bundle had insufficient mechanical properties and fiber quality grade because the heating rate used in the carbonization step was high.

(Comparative example 6)

Except that the stretching ratio used in the pre-carbonization step and the maximum temperature, treatment time at maximum temperature, and stretching ratio used in the carbonization step were as shown in Table 1, a carbon fiber bundle was produced and subjected to various evaluations in the same manner as in Example 1. Results are summarized in Table 2, and they suggest that the resulting carbon fiber bundle had good mechanical properties but had an insufficient fiber quality grade because of a low carbonization temperature and a low stretching ratio used in the carbonization step.

(Comparative example 7)

Except that the stretching ratio used in the pre-carbonization step and the maximum temperature, heating rate, treatment time at maximum temperature, and stretching ratio used in the carbonization step were as shown in Table 1, a carbon fiber bundle was produced and subjected to various evaluations in the same manner as in Example 1. Results are summarized in Table 2, and they suggest that the resulting carbon fiber bundle had insufficient mechanical properties and fiber quality grade because of a low carbonization temperature and a low stretching ratio used in the carbonization step.

(Comparative example 8)

Except that the stretching ratio used in the pre-carbonization step and the maximum temperature, heating rate, treatment time at maximum temperature, and stretching ratio used in the carbonization step were as shown in Table 1, a carbon fiber bundle was produced and subjected to various evaluations in the same manner as in Example 1. Results are summarized in Table 2, and they suggest that the resulting carbon fiber bundle had insufficient mechanical properties and fiber quality grade because of a low carbonization temperature and a low stretching ratio used in the carbonization step.

(Comparative example 9)

A prepreg and a carbon fiber-reinforced composite were produced using a carbon fiber bundle of Torayca (registered trademark) M46J (strand elastic modulus 434 GPa, manufactured by Toray Industries, Inc.) in combination with the resin composition described below. When measured, the 0° tensile modulus was found to be 256 GPa and the 0° compressive strength was found to be 1,060 MPa. As compared with the composite prepared in Example 10, the 0° tensile modulus was comparable, but the 0° compressive strength was lower.
In addition, the elastic modulus of a cured resin produced from the same resin composition was measured, and results showed that it had an elastic modulus of 3.3 GPa.

(Comparative example 10)

A prepreg and a carbon fiber-reinforced composite were produced using a carbon fiber bundle of Torayca (registered trademark) M40S (strand elastic modulus 380 GPa, manufactured by Toray Industries, Inc.) in combination with the resin composition described below. When measured, the 0° tensile modulus was found to be 223 GPa and the 0° compressive strength was found to be 1,240 MPa. As compared with the composite prepared in Example 11, the 0° compressive strength was comparable, but the 0° tensile modulus was lower. In addition, the elastic modulus of a cured resin produced from the same resin composition was measured, and results showed that it had an elastic modulus of 3.3 GPa.

Resin composition:

- liquid-state bisphenol A diglycidyl ether resin (jER (registered trademark) 1001, manufactured by Mitsubishi Chemical Corporation): 20 parts by mass, 30 parts by mass
- liquid-state bisphenol A type epoxy resin (jER (registered trademark) 828, manufactured by Mitsubishi Chemical Corporation): 30 parts by mass
- phenol novolac polyglycidyl ether resin (EPICLON (registered trademark) N740, manufactured by DIC Corporation): 27 parts by mass
- polyvinyl formal resin (Vinylec (registered trademark) PVF-K, manufactured by JNC Corporation): 5 parts by mass

Curing agent:

- dicyandiamide (manufactured by Mitsubishi Chemical Corporation): 6 parts by mass Curing accelerator:
- 3-(3,4-dichlorophenyl)-1,1-dimethylurea (manufactured by Hodogaya Chemical Co., Ltd.): 3 parts by mass

[Table 3]

[Table 3]

| | unit | Example 11 | Comparative example 9 | Comparative example 10 |
|---|---|---|---|---|
| 0° tensile modulus of unidirectional fiber-reinforced composite | GPa | 259 | 256 | 223 |
| 0° compressive strength of unidirectional fiber-reinforced composite | MPa | 1,240 | 1,060 | 1,240 |

**Claims**

1. A carbon fiber bundle having a strand tensile strength of 4.5 GPa or more and 6.5 GPa or less, a strand tensile modulus of 400 GPa or more, a size of crystallites of 4.0 nm or more and 4.7 nm or less, and a single-fiber diameter of 5.2 μm or more and 6.2 μm or less and being substantially non-twisted.

2. A carbon fiber bundle as set forth in claim 1, wherein the number of unwound bundle fuzz defects is 0.3 per meter or less.

3. A carbon fiber bundle as set forth in either claim 1 or 2, wherein the number of bobbin release fuzz defects is 6 per 100 m or less.

4. A carbon fiber bundle as set forth in either claim 1 or 2, wherein the density is 1.84 g/cm$^3$ or less.

5. A carbon fiber as set forth in either claim 1 or 2, wherein the single-fiber diameter is 5.5 μm or more and 6.2 μm or less.

6. A carbon fiber bundle as set forth in either claim 1 or 2, wherein the strand tensile strength is 4.8 GPa or more and 6.5 GPa or less.

7. A carbon fiber bundle as set forth in either claim 1 or 2, wherein the strand tensile strength is 5.0 GPa or more and 6.5 GPa or less.

8. A carbon fiber bundle as set forth in either claim 1 or 2, wherein the strand tensile strength is 5.5 GPa or more and 6.5 GPa or less.

9. A prepreg comprising a carbon fiber bundle as set forth in either claim 1 or 2 impregnated with a thermosetting resin wherein the number of prepreg fuzz defects is 7 per 100 m$^2$ or less.

10. A prepreg comprising a carbon fiber bundle as set forth in either claim 1 or 2 impregnated with a thermosetting resin wherein the thermosetting resin gives a cured product with an elastic modulus of 3.0 GPa or more.

11. A prepreg comprising a carbon fiber bundle as set forth in either claim 1 or 2 impregnated with a thermosetting resin wherein the thermosetting resin gives a cured product with an elastic modulus of 3.8 GPa or more and 5.5 GPa or less.

12. A carbon fiber-reinforced composite comprising a carbon fiber bundle as set forth in either claim 1 or 2 and a matrix resin.

13. A carbon fiber-reinforced composite comprising a carbon fiber bundle as set forth in either claim 1 or 2 and a matrix resin and
having a composite 0° compressive strength of 1,200 MPa or more and 1,350 MPa or less and a composite 0° tensile modulus of 245 GPa or more and 270 GPa or less.

**EP 4 660 358 A1**

<table>
<tr><td colspan="2">INTERNATIONAL SEARCH REPORT</td><td colspan="2">International application No.<br><br>**PCT/JP2024/002785**</td></tr>
</table>

**A.    CLASSIFICATION OF SUBJECT MATTER**

*D01F 9/22*(2006.01)i; *C08J 5/04*(2006.01)i; *C08J 5/24*(2006.01)i
FI:    D01F9/22; C08J5/04; C08J5/24

According to International Patent Classification (IPC) or to both national classification and IPC

**B.    FIELDS SEARCHED**

Minimum documentation searched (classification system followed by classification symbols)

D01F9/22; C08J5/04; C08J5/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JST7580 (JDreamIII)

**C.    DOCUMENTS CONSIDERED TO BE RELEVANT**

| Category* | Citation of document, with indication, where appropriate, of the relevant passages | Relevant to claim No. |
|---|---|---|
| A | JP 2019-218677 A (TORAY INDUSTRIES, INC.) 26 December 2019 (2019-12-26)<br>entire text | 1-13 |
| A | WO 2019/203088 A1 (TORAY INDUSTRIES, INC.) 24 October 2019 (2019-10-24)<br>entire text | 1-13 |
| A | JP 2014-141761 A (TORAY INDUSTRIES, INC.) 07 August 2014 (2014-08-07)<br>entire text | 1-13 |
| A | JP 2018-141251 A (TORAY INDUSTRIES, INC.) 13 September 2018 (2018-09-13)<br>entire text | 1-13 |
| P, A | JP 2023-146344 A (MITSUBISHI CHEMICAL CORPORATION) 12 October 2023<br>(2023-10-12)<br>entire text | 1-13 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 March 2024** | **09 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

| INTERNATIONAL SEARCH REPORT | | International application No. |
|---|---|---|
| Information on patent family members | | **PCT/JP2024/002785** |

| Patent document cited in search report | | | Publication date (day/month/year) | Patent family member(s) | Publication date (day/month/year) |
|---|---|---|---|---|---|
| JP | 2019-218677 | A | 26 December 2019 | (Family: none) | |
| WO | 2019/203088 | A1 | 24 October 2019 | US 2021/0108041 A1 entire text<br>EP 3783136 A1<br>CN 111936681 A<br>KR 10-2020-0142505 A<br>MX 2020009137 A<br>TW 202003653 A | |
| JP | 2014-141761 | A | 07 August 2014 | (Family: none) | |
| JP | 2018-141251 | A | 13 September 2018 | (Family: none) | |
| JP | 2023-146344 | A | 12 October 2023 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI3180514 A
- JP 2014141761 A
- JP 2014159665 A
- WO 2019244830 A
- WO 2008047745 A
- JP 2008308776 A
- JP 2015010290 A